# EUROPÄISCHE PATENTANMELDUNG

(11) **EP 4 354 235 A1**
(43) Veröffentlichungstag der Anmeldung: **17.04.2024**
(21) Anmeldenummer: 22201081.1
(22) Anmeldetag: 12.10.2022
(51) Int. Cl.: G05B 19/05, G05B 15/02, G05D 7/06

(54) **SANITÄRSYSTEM**

(71) Anmelder: Geberit International AG, 8645 Jona (CH)
(72) Erfinder: RAISSLE, Daniel, 8852 Altendorf (CH)
(74) Vertreter: Frischknecht, Harry Ralph

(57) **Zusammenfassung**

Ein Sanitärsystem umfasst
mindestens einen Sanitärartikel (1a, 1b, 1c, 1d, 1e) mit jeweils einer Sanitärartikelsteuerung (2) und einem Aktuator (3), wobei die Sanitärartikelsteuerung (2) zur bestimmungsgemässen Ansteuerung des Aktuators (3) konfiguriert ist und wobei die Sanitärartikelsteuerung (2) eine sanitärartikelseitige Kommunikationsschnittstelle (SK1) aufweist,
mindestens ein Gateway (4) mit einer gatewayseitigen Kommunikationsschnittstelle (GK1), und
einen mit der gatewayseitige Kommunikationsschnittstelle (GK1) in Verbindung stehenden Speicher (5) und einen Prozessor (6),
wobei das mindestens eine Gateway (4) über die gatewayseitige Kommunikationsschnittstelle (GK1) mit der sanitärartikelseitigen Kommunikationsschnittstelle (SK1) über eine Datenverbindung (D) in Verbindung steht, welche Datenverbindung (D) derart konfiguriert ist, dass Betriebsdaten der Sanitärartikelsteuerung (2) und/oder des Aktuators (3) über die Datenverbindung (D) an das Gateway (4) übermittelbar sind,
wobei der Speicher (5) derart konfiguriert ist, um die erhaltenen Betriebsdaten zu speichern, und wobei der Prozessor (6) derart konfiguriert ist, um die erhaltenen Betriebsdaten auszuwerten,
und wobei bei Erreichen eines vorbestimmten Auswertungskriteriums aus der Auswertung der erhaltenen Betriebsdaten, der Prozessor (6) einen isolierten Steuerungsbefehl bereitstellt.

## Beschreibung

### TECHNISCHES GEBIET

Die vorliegende Erfindung betrifft ein Sanitärsystem nach Anspruch 1.

### STAND DER TECHNIK

Aus dem Stand der Technik sind vernetzte Sanitärsysteme bekannt. Beispielsweise offenbart die DE 93 13 983 U1 eine Ansteuerung von diversen Sanitärelementen mit einer zentralen Steuerung. Die WO 2009/061857 zeigt die Anbindung einer Sanitärinfrastruktur an das Internet.

### DARSTELLUNG DER ERFINDUNG

Eine Aufgabe der vorliegenden Erfindung ist es, ein vernetztes Sanitärsystem anzugeben, welches erweitere Funktionalitäten aufweist.

Diese Aufgabe löst das Sanitärsystem nach Anspruch 1. Demgemäss umfasst ein Sanitärsystem
mindestens einen Sanitärartikel mit jeweils einer Sanitärartikelsteuerung und einem Aktuator, wobei die Sanitärartikelsteuerung zur bestimmungsgemässen Ansteuerung des Aktuators konfiguriert ist und wobei die Sanitärartikelsteuerung eine sanitärartikelseitige Kommunikationsschnittstelle aufweist,
mindestens ein Gateway mit einer gatewayseitigen Kommunikationsschnittstelle, und
einen mit der gatewayseitige Kommunikationsschnittstelle in Verbindung stehenden Speicher und einen Prozessor. Das mindestens eine Gateway steht über die gatewayseitige Kommunikationsschnittstelle mit der sanitärartikelseitigen Kommunikationsschnittstelle über eine Datenverbindung in Verbindung.

Die Datenverbindung ist derart konfiguriert, dass Betriebsdaten der Sanitärartikelsteuerung und/oder des Aktuators über die Datenverbindung an das Gateway übermittelbar sind. Der Speicher ist derart konfiguriert, um die erhaltenen Betriebsdaten zu speichern. Der Prozessor ist derart konfiguriert, um die erhaltenen Betriebsdaten auszuwerten. Bei Erreichen eines vorbestimmten Auswertungskriteriums aus der Auswertung der erhaltenen Betriebsdaten, stellt der Prozessor einen isolierten Steuerungsbefehl bereit.

Unter der Ausdrucksweise "Betriebsdaten" werden Daten verstanden, welche den Zustand und/oder die Funktionsweise des Aktautors bzw. der Sanitärartikelsteuerung betreffen. Beispielsweise sind dies Anzahl der Betätigungen oder die Anzahl der Betätigungen pro Zeiteinheit oder ein Wasservolumen pro Betätigung. Das Auswertungskriterium ist beispielsweise das Erreichen von einer bestimmten Anzahl von Betätigungen oder das Erreichen eines bestimmten Wasservolumens oder das Ausbleiben von einer Betätigung über eine bestimmte Zeit.

Der isolierte Steuerungsbefehl kann, wie unten beschrieben, dem Sanitärartikel und/oder einem Drittsystem übermittelt werden. Unter einem "isolierten Steuerungsbefehl" wird ein Steuerungsbefehl verstanden, der die vorgesehene Funktionsweise der Sanitärartikelsteuerung und des Aktuators als solche nicht verändert. Das heisst, dass der isolierte Steuerungsbefehl die bestimmungsgemässe Ansteuerung nicht verändert. Durch die gezielte Ansteuerung des Sanitärartikels mit dem isolierten Steuerungsbefehl durch das Gateway kann der Sanitärartikel unabhängig von der bestimmungsgemässen Ansteuerung angesteuert werden. Insbesondere lässt sich der bzw. die Sanitärartikel dadurch in ein übergeordnetes System einzubinden und kann für eine weitere Funktion, die von der bestimmungsgemässen Ansteuerung unterschiedlich ist, angesteuert werden.

Vorzugsweise sind der Speicher und der Prozessor im Gateway integriert. In anderen Ausführungsformen sind der Speicher und der Prozessor in einem Gebäudeleitsystem oder einem Computer integriert, wobei das Gebäudeleitsystem bzw. der Computer mit dem Gateway in Wirkverbindung stehen.

Ein weiterer Vorteil ist, dass alle Betriebsdaten zentral im Speicher, beispielsweise auf dem Gateway, gespeichert werden können. Hierdurch können die Betriebsdaten an zentraler Stelle ausgewertet werden und dann, aufgrund der Datenauswertung, können die isolierten Steuerungsbefehle gezielt an die Sanitärartikel gesendet werden. Die Auswertung an zentraler Stelle hat den Vorteil, dass im operativen Betrieb die Betriebsdaten von allen Sanitärartikelsteuerungen an einer zentralen Stelle zusammenlaufen. Das hat den Vorteil, dass das Gateway einzelne Sanitärartikel gezielt mit dem isolierten Steuerungsbefehl basierend auf allen Betriebsdaten ansteuern kann. Demnach kann auf die Vernetzung der einzelnen Sanitärartikelsteuerungen untereinander verzichtet werden.

Ferner ergeht die Möglichkeit, dass im Gateway die für den operativen Betrieb erforderlichen Parameter, beispielsweise Rohrleitungslängen oder Rohrdimensionen, in einem digitalen Format gespeichert werden und dann für das Auswertungskriterium und/oder für den isolierten Steuerungsbefehl hinzugezogen werden können. Die Parameter können beispielsweise von der Gebäudeplanung her in digitaler Form automatisiert dem Gateway zur Verfügung gestellt werden.

Die Ausdrucksweise "bestimmungsgemässe Ansteuerung" ist so zu verstehen, dass der Sanitärartikelsteuerung den Aktuator so ansteuert, dass am Sanitärartikel eine Funktion ausgelöst werden kann, die der üblichen Verwendung des Sanitärartikels entspricht. Der Sanitärartikel kann verschiedenartig ausgebildet sein, wobei die Sanitärartikelsteuerung den Aktuator für den bestimmungsgemässen Gebrauch des Sanitärartikels ansteuert.

Der Sanitärartikel ist in einer Variante ein Urinal mit einer Spüleinrichtung und die Sanitärartikelsteuerung ist eine Urinalsteuerung, wobei der Aktuator ein Spülventil in der Spüleinrichtung ist, welches durch die Urinalsteuerung angesteuert wird, wodurch dem Urinal Spülwasser zugeführt wird. Hierdurch werden die im Urinal liegenden Materialien weggespült. Die Spüleinrichtung ist beispielsweise ein Spülkasten.

Der Sanitärartikel ist in einer anderen Variante eine Toilettenschüssel mit einer Spüleinrichtung und die Sanitärartikelsteuerung ist eine Toilettensteuerung, wobei der Aktuator ein Spülventil in der Spüleinrichtung ist, welches durch die Toilettensteuerung angesteuert wird, wodurch dem Toilettenkörper Spülwasser zugeführt wird. Hierdurch werden die im Toilettenkörper liegenden Materialien weggespült. Die Spüleinrichtung ist beispielsweise ein Spülkasten.

Wenn der Sanitärartikel ein Urinal oder eine Toilettenschüssel ist, ist die bestimmungsgemässe Ansteuerung des Aktuators beispielsweise die Spülung in bestimmten Zeitintervallen oder die Spülung nach Erfassung eines Benutzers. Der isolierte Steuerungsbefehl kann eine ausserordentliche Spülung sein, wenn der Sanitärartikel länger nicht benützt worden ist. Beispielsweise um ein Austrocknen eines Geruchsverschlusses zu verhindern oder um eine Hygienespülung bereitzustellen. Bei der Hygienespülung wird typischerweise der am Ende einer Versorgungsleitung liegende Sanitärartikel angesteuert.

Zusammenfassend für das Urinal bzw. die Toilettenschüssel ist die bestimmungsgemässe Ansteuerung eine Spülauslösung nach Erfassung einer Benutzung, wobei dazu ein Spülventil entsprechend geöffnet wird. Die bestimmungsgemässe Ansteuerung sorgt dabei für eine Entsorgung der im Urinal oder der Toilette liegenden Materialien, wie Ausscheidungen, Toilettenpapier, etc..

Der Sanitärartikel ist in einer anderen Variante eine Auslaufarmatur und die Sanitärartikelsteuerung ist eine Auslaufarmaturensteuerung, wobei der Aktuator ein Ventil an der Auslaufarmatur ist, welches durch die Auslaufarmaturensteuerung angesteuert wird, wodurch die Auslaufarmatur Wasser bereitstellt. Die Auslaufarmatur kann ein Wasserhahn an einem Waschbecken oder ein Duschelement, wie in Duschkopf oder eine Duschbrause, in einer Dusche sein. Hier ist die bestimmungsgemässe Ansteuerung ein Öffnen und Schliessen des Ventils, beispielsweise bei Erkennung eines Benutzers oder bei einer Benutzereingabe bzw. bei einer Benutzeraktion.

Vorzugsweise ist der isolierte Steuerungsbefehl über die Datenverbindung vom Gateway an die Sanitärartikelsteuerung übermittelbar, wobei die Sanitärartikelsteuerung den Aktuator mit dem isolierten Steuerungsbefehl ansteuert.

Vorzugsweise steuert der isolierte Steuerungsbefehl den Aktuator unabhängig von der bestimmungsgemässen Ansteuerung an. Der Aktuator ist ein Ventil ist und wobei der isolierte Steuerungsbefehl ein Hygienespülbefehl ist, mit welchem das Ventil über eine vorbestimmte Zeitdauer geöffnet und nach Ablauf der vorbestimmten Zeitdauer wieder geschlossen wird.

Der isolierte Steuerungsbefehl öffnet das Ventil unabhängig von der bestimmungsgemässen Ansteuerung und kann so die Hygienespülung bereitstellen. Das vorbestimmte Auswertungskriterium wäre im Anwendungsfall Hygienespülung die Erfassung einer Zeitdauer nach einer letzten Spülung, wobei wenn die Zeitdauer eine vorbestimmte Zeitdauer überschritten hat, das Auswertungskriterium erreicht wird und dann der isolierte Steuerungsbefehl bereitgestellt wird.

Bei Vorhandensein von mehreren Sanitärartikeln steuert das Gateway denjenigen bzw. diejenigen Sanitärartikel an, welche aufgrund der Rohrtopologie und/oder im Gateway abgespeicherte Hygienelogik für eine Hygienespülung vorgesehen sind. Typischerweise wird der am Ende einer Frischwasserleitung liegende Sanitärartikel für den Zweck der Hygienespülung angesteuert.

Vorzugsweise ist der Sanitärartikel ein Hygienespülapparat und der Aktuator ein Ventil, wobei die bestimmungsgemässe Ansteuerung deaktiviert wird, wenn die Datenverbindung bereitgestellt wurde, und wobei der isolierte Steuerungsbefehl ein Hygienespülbefehl ist, mit welchem das Ventil über eine vorbestimmte Zeitdauer geöffnet und nach Ablauf der vorbestimmten Zeitdauer wieder geschlossen wird.

Das vorbestimmte Auswertungskriterium wäre in dieser Variante die Erfassung einer Zeitdauer nach einer letzten Spülung, wobei wenn die Zeitdauer eine vorbestimmte Zeitdauer überschritten hat, das Auswertungskriterium erreicht wird und dann der isolierte Steuerungsbefehl bereitgestellt wird.

Vorzugsweise wird die bestimmungsgemässe Ansteuerung dem Gateway zugewiesen und der isolierte Steuerungsbefehl ist ein bestimmungsgemässer Steuerungsbefehl, derart, dass der Aktuator zentral vom Gateway angesteuert wird.

Diese Ausführungsform ist insbesondere dann von Vorteil, wenn das Sanitärsystem eine Vielzahl von Sanitärartikeln aufweist. Beispielsweise eine Toiletten- und Urinalanlage in einem halböffentlichen oder einem öffentlichen Gebäude. Durch die Zuweisung der bestimmungsgemässen Ansteuerung an das Gateway kann die Ansteuerung der einzelnen Sanitärartikel zentral und koordiniert erfolgen.

Vorzugsweise wird in dieser Variante die Sanitärartikelsteuerung, die zur bestimmungsgemässen Ansteuerung des Aktuators ausgebildet ist, deaktiviert.

Vorzugsweise werden die bestimmungsgemässe Ansteuerung und der isolierte Steuerungsbefehl getrennt voneinander ausgeführt. Vorzugsweise wird bei Ausführung eines Befehls gemäss der bestimmungsgemässen Ansteuerung der isolierte Steuerungsbefehl zurückgestellt und nach Abschluss des Befehls gemäss der bestimmungsgemässen Ansteuerung ausgeführt wird. Das heisst, dass wenn die Sanitärartikelsteuerung einen Befehl gemäss der bestimmungsgemässen Ansteuerung ausführt, der isolierte Steuerungsbefehl durch die Sanitärartikelsteuerung empfangen, wobei der isolierte Steuerungsbefehl erst nach Abschluss der Aktion gemäss der bestimmungsgemässen Ansteuerung ausführbar ist. Hierdurch können Fehlfunktion und/oder die Verwirrung eines Benutzers durch automatisch ausgelöste Vorgänge verhindert werden.

Vorzugsweise wird der isolierte Steuerungsbefehl ohne Zeitverzögerung an die Sanitärartikelsteuerung gesendet, wobei die Sanitärartikelsteuerung den Steuerungsbefehl unmittelbar nach Erhalt ohne Zeitverzögerung ausführt.

Das heisst, es wird ein isolierter Steuerungsbefehl sofort durch die Sanitärartikelsteuerung ausgeführt. Da der isolierte Steuerungsbefehl sofort ausgeführt wird, muss dieser nicht auf Stufe des Sanitärartikels gespeichert werden.

Vorzugsweise weist die Sanitärartikelsteuerung weiterhin einen Speicher auf, welcher zur Speicherung von vordefinierten Steuerungsparametern für die bestimmungsgemässe Ansteuerung des Aktuators konfiguriert ist und/oder welcher zur Speicherung der Betriebsdaten konfiguriert ist.

Besonders bevorzugt bleiben die Steuerungsparameter bei Erhalt des isolierten Steuerungsbefehls unverändert und der isolierte Steuerungsbefehl ist nicht im Speicher der Sanitärartikelsteuerung speicherbar.

Vorzugsweise weist der Sanitärartikel ein mit der Sanitärartikelsteuerung in Wirkverbindung stehendes Auslöseelement auf, welches zur bestimmungsgemässen Ansteuerung des Aktuators bzw. zur Auslösung einer Funktion am Sanitärartikel konfiguriert ist. Das Auslöseelement ist beispielsweise eine Betätigungstaste oder ein Erfassungssensor zur Erfassung eines Benutzers.

Vorzugsweise weist das Sanitärsystem weiterhin einen Computer, insbesondere einen mobilen Computer, auf. Der Computer verfügt über eine computerseitige Kommunikationsschnittstelle und das Gateway weist eine weitere Kommunikationsschnittstelle auf. Zwischen der computerseitigen Kommunikationsschnittstelle und der weiteren Kommunikationsschnittstelle ist eine Datenverbindung bereitstellbar. Vorzugsweise erfolgt die Datenverbindung über ein Gebäudeleitsystem.

In einer Variante kann der Computer direkt mit dem Gateway verbunden sein. In einer anderen Variante kann der Computer über ein digitales Netzwerk, wie das Internet oder eine Cloud mit dem Gateway in Verbindung sein.

Vorzugsweise stellt der Computer ein Benutzerinterface bereit, welches die auf dem Gateway gespeicherten Betriebsdaten anzeigt. Die Verarbeitung der Betriebsdaten erfolgt bevorzugt auf dem Gateway. Eine allfällige Benutzereingabe erfolgt ebenfalls über das Benutzerinterface, wobei die Benutzereingabe an das Gateway zur weiteren Verarbeitung übermittelt wird.

Vorzugsweise ist der Computer ein Notebook, ein Tablet oder ein Smartphone. Für die Benutzereingabe ist eine Applikation auf dem Computer gespeichert, welche durch den Benutzer bedient werden kann.

Vorzugsweise sind die vordefinierten Steuerungsparameter ausschliesslich durch einen Befehl, der vom Computer abgesetzt wird, veränderbar.

Vorzugsweise sind die Steuerungsparameter ausschliesslich durch manuelle Eingabe eines Benutzerbefehls am Computer veränderbar.

Unter einer manuellen Eingabe ist eine händische Eingabe eines Benutzers zu verstehen. Beispielsweise durch eine Benutzerbestätigung oder eine aktive Einstellung eines Bereiches.

Vorzugsweise ist der Aktuator ein Wasserventil. Insbesondere ist der Aktuatorein Spülventil und/oder ein Hygienespülventil und/oder Absperrventil und/oder ein Bypassventil. Der isolierte Steuerungsbefehl weist einen Ventilbetätigungsbefehl, insbesondere einen Öffnungsbefehl und einen Schliessbefehl und eine Ventilöffnungsdauer, auf.

Vorzugsweise umfasst das Sanitärsystem weiterhin mindestens einen Sensor, welcher mit einer weiteren gatewayseitigen Kommunikationsschnittstelle über eine Datenverbindung mit dem Gateway in Verbindung steht, wobei über die Datenverbindung Sensordaten vom mindestens einen Sensor an das Gateway übermittelt werden, und wobei die Sensordaten in die Auswertung miteinbezogen werden.

Der Sensor ist beispielsweise ein Temperatursensor. Mit dem Temperatursensor können verschiedene Temperarturen erfasst werden, wie beispielsweise eine Raumtemperatur oder eine Wassertemperatur.

Vorzugsweise weist das Gateway mindestens eine weitere Kommunikationsschnittstelle auf. Das Sanitärsystem weist weiterhin mindestens ein Drittsystem mit einer drittsystemseitigen Kommunikationsschnittstelle auf, wobei eine Datenverbindung zwischen der weiteren Kommunikationsschnittstelle und der drittsystemseitigen Kommunikationsschnittstelle bereitstellbar ist, über welche Datenverbindung der isolierte Steuerungsbefehl dem Drittsystem durch das Gateway bereitgestellt wird. Das mindestens eine Drittsystem kann aus der folgenden Gruppe ausgewählt sein:
- das mindestens eine Drittsystem ist ein Lichtsystem mit mindestens einer Leuchte und wobei der isolierte Steuerungsbefehl das Lichtsystem bzw. die mindestens eine Leuchte ansteuert; und/oder
- das mindestens eine Drittsystem ist ein Lüftersystem mit mindestens einem Lüfter und wobei der isolierte Steuerungsbefehl das Lüftersystem bzw. den mindestens einen Lüfter ansteuert; und/oder
- das mindestens eine Drittsystem ist ein Duftspendersystem mit mindestens einem Duftspender und wobei der isolierte Steuerungsbefehl das Duftspendersystem bzw. den mindestens einen Duftspender ansteuert; und/oder
- wobei das mindestens eine Drittsystem ist ein Alarmierungssystem und wobei der isolierte Steuerungsbefehl das Alarmierungssystem ansteuert.

Vorzugsweise umfassen die Betriebsdaten für die Ansteuerung des Drittsystems die Anzahl der Benutzungen des mindestens einen Sanitärartikels.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

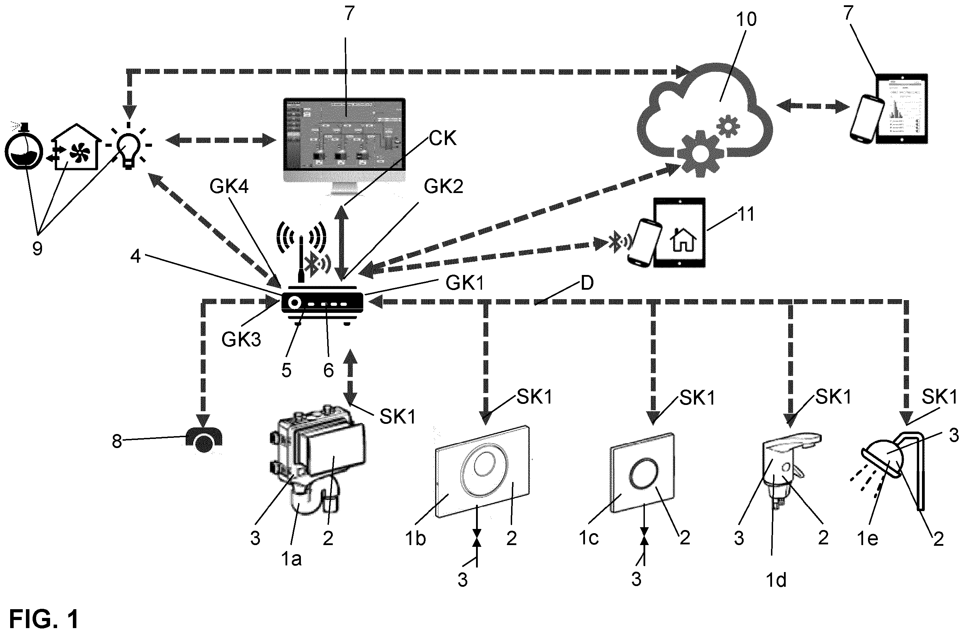

- Fig. 1: eine schematische Ansicht eines Sanitärsystem nach einer bevorzugten Ausführungsform der vorliegenden Erfindung.

### BESCHREIBUNG BEVORZUGTER AUSFÜHRUNGSFORMEN

In der Figur 1 wird ein Sanitärsystem gemäss einer besonders bevorzugten Ausführungsform der vorliegenden Erfindung gezeigt.

Das Sanitärsystem umfasst mindestens einen Sanitärartikel 1a, 1b, 1c, 1d, 1e und mindestens einen Gateway 4, mit welchem die Sanitärartikel 1a, 1b, 1c, 1d, 1e vernetzt sind.

Jeder der Sanitärartikel 1a, 1b, 1c, 1d, 1e umfasst jeweils eine Sanitärartikelsteuerung 2 und einen Aktuator 3. Die Sanitärartikelsteuerung 2 ist zur bestimmungsgemässen Ansteuerung des Aktuators 3 konfiguriert. Weiter weist die Sanitärartikelsteuerung 2 eine sanitärartikelseitige Kommunikationsschnittstelle SK1 auf, über welche die Sanitärartikelsteuerung 2 mit dem Gateway 4 vernetzt ist.

Das mindestens eine Gateway 4 umfasst eine gatewayseitige Kommunikationsschnittstelle GK1, einen mit der gatewayseitigen Kommunikationsschnittstelle GK1 in Verbindung stehenden Speicher 5 und einen Prozessor 6. Der Speicher und der Prozessor können auch an anderer Stelle, beispielsweise bei den unten beschriebenen Computer 7 angeordnet sein. Das mindestens eine Gateway 4 steht über die gatewayseitige Kommunikationsschnittstelle GK1 mit der sanitärartikelseitigen Kommunikationsschnittstelle SK1 über eine Datenverbindung D in Verbindung. Die Datenverbindung D ist derart konfiguriert, dass Betriebsdaten der Sanitärartikelsteuerung 2 und/oder des Aktuators 3 über die Datenverbindung D an das Gateway 4 übermittelbar sind. Vorzugsweise ist die Datenverbindung durch eine drahtgebundene oder drahtlose Verbindung bereitgestellt. Der Speicher 5 ist derart konfiguriert, dass die erhaltenen Betriebsdaten gespeichert werden können. Der Prozessor 6 ist derart konfiguriert, dass die erhaltenen Betriebsdaten ausgewertet werden können. Bei Erreichen eines vorbestimmten Auswertungskriteriums aus der Auswertung der erhaltenen Betriebsdaten, der stellt Prozessor 6 einen isolierten Steuerungsbefehl bereit.

Der isolierte Steuerungsbefehl ist über die Datenverbindung D vom Gateway 4 an die Sanitärartikelsteuerung 2 übermittelbar. Die Sanitärartikelsteuerung 2 steuert dann den Aktuator 3 mit dem isolierten Steuerungsbefehl an.

Vorzugsweise werden die bestimmungsgemässe Ansteuerung und der isolierte Steuerungsbefehl getrennt voneinander ausgeführt. Vorzugsweise wird bei Ausführung eines Befehls gemäss der bestimmungsgemässen Ansteuerung der isolierte Steuerungsbefehl zurückgestellt und nach Abschluss des Befehls gemäss der bestimmungsgemässen Ansteuerung ausgeführt wird. Weiter ist es besonders bevorzugt dassbei Beginn der Ausführung des isolierten Steuerungsbefehls die bestimmungsgemässe Ansteuerung deaktiviert wird. Bei Ende der Ausführung des isolierten Steuerungsbefehls wird die bestimmungsgemässe Ansteuerung wieder aktiviert.

Vorzugsweise wird der isolierte Steuerungsbefehl ohne Zeitverzögerung, das heisst in Echtzeit oder nahezu in Echtzeit, an die Sanitärartikelsteuerung 2 gesendet, wobei die Sanitärartikelsteuerung 2 den Steuerungsbefehl unmittelbar nach Erhalt ohne Zeitverzögerung, das heisst in Echtzeit oder nahezu in Echtzeit, ausführt.

Vorzugsweise weist die Sanitärartikelsteuerung 2 weiterhin einen Speicher aufweist, welcher zur Speicherung von vordefinierten Steuerungsparametern für die bestimmungsgemässe Ansteuerung des Aktuators konfiguriert ist und/oder welcher zur Speicherung der Betriebsdaten konfiguriert ist.

Vorzugsweise bleiben die Steuerungsparameter bei Erhalt des isolierten Steuerungsbefehls unverändert. Der isolierte Steuerungsbefehl ist nicht im Speicher der Sanitärartikelsteuerung speicherbar.

Vorzugsweise weist der Sanitärartikel ein mit der Sanitärartikelsteuerung in Wirkverbindung stehendes Auslöseelement, welches zur bestimmungsgemässen Ansteuerung des Aktuators bzw. zur Auslösung einer Funktion am Sanitärartikel konfiguriert ist. Das Auslöseelement ist beispielsweise ein Erfassungssensor oder eine Betätigungstaste oder dergleichen.

Vorzugsweise weist das Sanitärsystem weiterhin einen Computer 7 auf. Der Computer 7 verfügt über eine computerseitige Kommunikationsschnittstelle CK. Das Gateway weist eine weitere Kommunikationsschnittstelle GK2 auf, wobei zwischen der computerseitigen Kommunikationsschnittstelle CK und der weiteren Kommunikationsschnittstelle GK2 eine Datenverbindung bereitstellbar ist.

Der optionale Computer 7 dient der Anzeige von Informationen bezüglich des Sanitärsystems und der Eingabe von Parametern für das Sanitärsystem. Der Computer 7 ist über eine Netzwerkstruktur 10 und/oder eine Cloudstruktur mit dem Gateway 4 verbunden.

In der gezeigten Ausführungsform ist ein optionaler weiterer Computer 11 vorhanden, welcher hier die Form Mobiltelefons oder eines Tablets oder eines Notebooks hat. Der weitere Computer 11 kann direkt mit dem Gateway verbunden werden. Beispielsweise über eine Bluetooth-Verbindung oder eine andere drahtlos oder drahtgebundene Verbindung. Über diese direkte Verbindung können Betriebsdaten abgerufen werden, Einstellungen am Gateway und/oder an den Sanitärartikelsteuerungen vorgenommen werden.

Beispielsweise sind die vordefinierten Steuerungsparameter durch einen am Computer 7 oder am weiteren Computer 11 eingegebenen Befehl veränderbar. Insbesondere sind die vordefinierten Steuerungsparameter ausschliesslich durch einen Befehl, der vom Computer 7, 11 abgesetzt wird, veränderbar. Insbesondere sind die Steuerungsparameter ausschliesslich durch manuelle Eingabe eines Benutzerbefehls am Computer veränderbar.

In der Figur 1 werden verschiedene Sanitärartikel gezeigt, welche einzeln oder in unterschiedlichen Kombinationen miteinander in einem Sanitärsystem eingesetzt werden können.

Der Sanitärartikel 1a ist ein Hygienespülapparat und der Aktuator 3 ist ein im Hygienespülapparat angeordnetes Ventil. Die Sanitärartikelsteuerung 2 steuert das Ventil gemäss einem Hygienespülregime an. Die bestimmungsgemässe Ansteuerung wird bevorzugt deaktiviert, wenn die Datenverbindung bereitgestellt wurde. Der isolierte Steuerungsbefehl ist ein Hygienespülbefehl, mit welchem das Ventil über eine vorbestimmte Zeitdauer geöffnet und nach Ablauf der vorbestimmten Zeitdauer wieder geschlossen wird. Mit anderen Worten gesagt, wird der Hygienespülapparat bei Vorhandensein der Datenverbindung vom Gateway 4 mit dem isolierten Steuerungsbefehl angesteuert.

Der Sanitärartikel 1b ist eine in den Figuren nicht gezeigte Toilette mit einer Betätigungsplatte und der Aktuator 3 ist ein Spülventil. Das Spülventil wird über eine Eingabe an der Betätigungsplatte angesteuert.

Der Sanitärartikel 1c ist ein in den Figuren nicht gezeigtes Urinal mit einer Betätigungsplatte und der Aktuator 3 ist ein Spülventil. Das Spülventil wird über eine Eingabe an der Betätigungsplatte angesteuert.

Der Sanitärartikel 1d ist eine elektronisch angesteuerte Auslaufarmatur in der Form eines Wasserhahns und der Aktuator 3 ist ein Ventil. Das Ventil wird über eine Eingabe an der Auslaufarmatur angesteuert.

Der Sanitärartikel 1d ist eine elektronisch angesteuerte Auslaufarmatur in der Form eines Duschkopfs und der Aktuator 3 ist ein Ventil. Das Ventil wird über eine Eingabe an der Auslaufarmatur angesteuert.

Das Spülventil der Toilette bzw. des Urinals oder das Ventil der Auslaufarmatur kann bestimmungsgemäss verwendet werden. Das heisst, für die Spülung der Toilette bzw. des Urinals oder für einen Zapfvorgang aus der Auslaufarmatur. Durch die Einbindung in das Sanitärsystem kann dem Spülventil bzw. dem Ventil aber auch eine zusätzliche Aufgabe übertragen werden. Beispielsweise kann das Spülventil bzw. das Ventil eine Hygienespülung ausführen. Das heisst, dass das Spülventil bzw. das Ventil mit dem isolierten Steuerungsbefehl für den Zweck einer Hygienespülung angesteuert wird. Der isolierte Steuerungsbefehl steuert das Spülventil bzw. das Ventil unabhängig von der bestimmungsgemässen Ansteuerung an. Dabei ist der isolierte Steuerungsbefehl ein Hygienespülbefehl, mit welchem das Ventil über eine vorbestimmte Zeitdauer geöffnet und nach Ablauf der vorbestimmten Zeitdauer wieder geschlossen wird.

Ferner umfasst das Sanitärsystem in der gezeigten Ausführungsform einen optionalen Sensor 8 und ein optionales Drittsystem 9.

Der Sensor 8 steht mit einer weiteren gatewayseitigen Kommunikationsschnittstelle GK3 über eine Datenverbindung mit dem Gateway 4 in Verbindung. Über die Datenverbindung werden Sensordaten vom mindestens einen Sensor an das Gateway übermittelt. Die Sensordaten werden in die Auswertung des besagten Auswertungskriteriums miteinbezogen.

Für das Drittsystem weist das Gateway 4 mindestens eine weitere Kommunikationsschnittstelle GK4 auf und das mindestens eine Drittsystem 9 weist eine drittsystemseitigen Kommunikationsschnittstelle DK auf. Zwischen der weiteren Kommunikationsschnittstelle GK4 und der drittsystemseitigen Kommunikationsschnittstelle DK ist eine Datenverbindung bereitstellbar, über welche Datenverbindung der isolierte Steuerungsbefehl dem Drittsystem 9 durch das Gateway 4 bereitgestellt wird. Das mindestens eine Drittsystem 9 wird durch den isolierten Steuerungsbefehl angesteuert. Das mindestens eine Drittsystem kann verschiedenartig ausgebildet sein:
- das mindestens eine Drittsystem ist ein Lichtsystem mit mindestens einer Leuchte und wobei der isolierte Steuerungsbefehl das Lichtsystem bzw. die mindestens eine Leuchte ansteuert; und/oder
- das mindestens eine Drittsystem ist ein Lüftersystem mit mindestens einem Lüfter und wobei der isolierte Steuerungsbefehl das Lüftersystem bzw. den mindestens einen Lüfter ansteuert; und/oder
- das mindestens eine Drittsystem ist ein Duftspendersystem mit mindestens einem Duftspender und wobei der isolierte Steuerungsbefehl das Duftspendersystem bzw. den mindestens einen Duftspender ansteuert; und/oder
- wobei das mindestens eine Drittsystem ist ein Alarmierungssystem und wobei der isolierte Steuerungsbefehl das Alarmierungssystem ansteuert.

Das Alarmierungssystem kann beispielsweise eine Nachricht bereitstellen, die Reinigungspersonal auf eine bestimmte Anzahl Benutzungen und die damit einhergehende Reinigung hinweist.

Das Drittsystem 9 steht hier weiterhin mit dem Computer 7 und/oder mit der Netzwerkstruktur 10 über eine Datenverbindung in Verbindung.

**BEZUGSZEICHENLISTE**

| | | | |
|---|---|---|---|
| 1a, 1b, 1c, 1d, 1e | Sanitärartikel | | Kommunikationsschnittstelle |
| 2 | Sanitärartikelsteuerung | GK1 | gatewayseitige Kommunikationsschnittstelle |
| 3 | Aktuator | | |
| 4 | Gateway | GK2 | weitere Kommunikationsschnittstelle |
| 5 | Speicher | | |
| 6 | Prozessor | GK3 | weitere Kommunikationsschnittstelle |
| 7 | Computer | | |
| 8 | Sensor | GK4 | weitere Kommunikationsschnittstelle |
| 9 | Drittsystem | | |
| 10 | Netzwerkstruktur | CK | computerseitige Kommunikationsschnittstelle |
| 11 | weiterer Computer | | |
| D | Datenverbindung | DK | drittsystemseitige Kommunikationsschnittstelle |
| SK1 | sanitärartikelseitige | | |

## Patentansprüche

1. Sanitärsystem umfassend
mindestens einen Sanitärartikel (1a, 1b, 1c, 1d, 1e) mit jeweils einer Sanitärartikelsteuerung (2) und einem Aktuator (3), wobei die Sanitärartikelsteuerung (2) zur bestimmungsgemässen Ansteuerung des Aktuators (3) konfiguriert ist und wobei die Sanitärartikelsteuerung (2) eine sanitärartikelseitige Kommunikationsschnittstelle (SK1) aufweist,
mindestens ein Gateway (4) mit einer gatewayseitigen Kommunikationsschnittstelle (GK1) und
einen mit der gatewayseitige Kommunikationsschnittstelle (GK1) in Verbindung stehenden Speicher (5) sowie einen Prozessor (6),
wobei das mindestens eine Gateway (4) über die gatewayseitige Kommunikationsschnittstelle (GK1) mit der sanitärartikelseitigen Kommunikationsschnittstelle (SK1) über eine Datenverbindung (D) in Verbindung steht, welche Datenverbindung (D) derart konfiguriert ist, dass Betriebsdaten der Sanitärartikelsteuerung (2) und/oder des Aktuators (3) über die Datenverbindung (D) an das Gateway (4) übermittelbar sind,
wobei der Speicher (5) derart konfiguriert ist, um die erhaltenen Betriebsdaten zu speichern, und wobei der Prozessor (6) derart konfiguriert ist, um die erhaltenen Betriebsdaten auszuwerten,
und wobei bei Erreichen eines vorbestimmten Auswertungskriteriums aus der Auswertung der erhaltenen Betriebsdaten, der Prozessor (6) einen isolierten Steuerungsbefehl bereitstellt.

2. Sanitärsystem nach Anspruch 1, **dadurch gekennzeichnet, dass** der isolierte Steuerungsbefehl über die Datenverbindung (D) vom Gateway (4) an die Sanitärartikelsteuerung (2) übermittelbar ist, wobei die Sanitärartikelsteuerung (2) den Aktuator (3) mit dem isolierten Steuerungsbefehl ansteuert.

3. Sanitärsystem nach Anspruch 1 oder 2, **dadurch gekennzeichnet, dass** der isolierte Steuerungsbefehl den Aktuator (3) unabhängig von der bestimmungsgemässen Ansteuerung ansteuert, wobei der Aktuator (3) ein Ventil ist und wobei der isolierte Steuerungsbefehl ein Hygienespülbefehl ist, mit welchem das Ventil über eine vorbestimmte Zeitdauer geöffnet und nach Ablauf der vorbestimmten Zeitdauer wieder geschlossen wird.

4. Sanitärsystem nach einem der vorhergehenden Ansprüche, **dadurch gekennzeichnet, dass** der Sanitärartikel ein Hygienespülapparat und der Aktuator ein Ventil ist, wobei die bestimmungsgemässe Ansteuerung deaktiviert wird, wenn die Datenverbindung bereitgestellt wurde, und wobei der isolierte Steuerungsbefehl ein Hygienespülbefehl ist, mit welchem das Ventil über eine vorbestimmte Zeitdauer geöffnet und nach Ablauf der vorbestimmten Zeitdauer wieder geschlossen wird.

5. Sanitärsystem nach einem der vorhergehenden Ansprüche, **dadurch gekennzeichnet, dass** die bestimmungsgemässe Ansteuerung dem Gateway (4) zugewiesen wird und dass der isolierte Steuerungsbefehl ein bestimmungsgemässer Steuerungsbefehl ist, derart, dass der Aktuator (3) zentral vom Gateway angesteuert wird.

6. Sanitärsystem nach einem der vorhergehenden Ansprüche, **dadurch gekennzeichnet, dass** die bestimmungsgemässe Ansteuerung und der isolierte Steuerungsbefehl getrennt voneinander ausgeführt werden, wobei bei Ausführung eines Befehls gemäss der bestimmungsgemässen Ansteuerung der isolierte Steuerungsbefehl vorzugsweise zurückgestellt und nach Abschluss des Befehls gemäss der bestimmungsgemässen Ansteuerung ausgeführt wird.

7. Sanitärsystem nach einem der vorhergehenden Ansprüche, **dadurch gekennzeichnet, dass** der isolierte Steuerungsbefehl ohne Zeitverzögerung an die Sanitärartikelsteuerung (2) gesendet wird, wobei die Sanitärartikelsteuerung (2) den Steuerungsbefehl unmittelbar nach Erhalt ohne Zeitverzögerung ausführt.

8. Sanitärsystem nach einem der vorhergehenden Ansprüche, **dadurch gekennzeichnet, dass** die Sanitärartikelsteuerung (2) weiterhin einen Speicher aufweist, welcher zur Speicherung von vordefinierten Steuerungsparametern für die bestimmungsgemässe Ansteuerung des Aktuators konfiguriert ist und/oder welcher zur Speicherung der Betriebsdaten konfiguriert ist.

9. Sanitärsystem nach Anspruch 8, **dadurch gekennzeichnet, dass** die Steuerungsparameter bei Erhalt des isolierten Steuerungsbefehls unverändert bleiben und dass der isolierte Steuerungsbefehl nicht im Speicher der Sanitärartikelsteuerung speicherbar ist.

10. Sanitärsystem nach einem der vorhergehenden Ansprüche, **dadurch gekennzeichnet, dass** der Sanitärartikel ein mit der Sanitärartikelsteuerung in Wirkverbindung stehendes Auslöseelement aufweist, welches zur bestimmungsgemässen Ansteuerung des Aktuators bzw. zur Auslösung einer Funktion am Sanitärartikel konfiguriert ist.

11. Sanitärsystem nach einem der vorhergehenden Ansprüche, **dadurch gekennzeichnet, dass** das Sanitärsystem weiterhin einen Computer (7, 11), insbesondere einen mobilen Computer, aufweist, wobei der Computer über eine computerseitige Kommunikationsschnittstelle (CK) verfügt und wobei das Gateway eine weitere Kommunikationsschnittstelle (GK2) aufweist, wobei zwischen der computerseitigen Kommunikationsschnittstelle (CK) und der weiteren Kommunikationsschnittstelle (GK2) eine Datenverbindung bereitstellbar ist.

12. Sanitärsystem nach Anspruch 11 und einem der Ansprüche 8 bis 10, **dadurch gekennzeichnet, dass** die vordefinierten Steuerungsparameter ausschliesslich durch einen Befehl, der vom Computer (7) abgesetzt wird, veränderbar sind.

13. Sanitärsystem nach Anspruch 12, **dadurch gekennzeichnet, dass** die Steuerungsparameter ausschliesslich durch manuelle Eingabe eines Benutzerbefehls am Computer veränderbar sind.

14. Sanitärsystem nach einem der vorhergehenden Ansprüche, **dadurch gekennzeichnet, dass** der Aktuator ein Wasserventil ist, insbesondere, dass der Aktuator ein Spülventil und/oder ein Hygienespülventil und/oder Absperrventil und/oder ein Bypassventil ist, und dass der isolierte Steuerungsbefehl einen Ventilbetätigungsbefehl, insbesondere einen Öffnungsbefehl und einen Schliessbefehl und eine Ventilöffnungsdauer, aufweist.

15. Sanitärsystem nach einem der vorhergehenden Ansprüche, **dadurch gekennzeichnet, dass** das Sanitärsystem weiterhin mindestens einen Sensor (8) umfasst, welcher mit einer weiteren gatewayseitigen Kommunikationsschnittstelle (GK3) über eine Datenverbindung mit dem Gateway (4) in Verbindung steht, wobei über die Datenverbindung Sensordaten vom mindestens einen Sensor an das Gateway übermittelt werden, und wobei die Sensordaten in die Auswertung miteinbezogen werden.

16. Sanitärsystem nach einem der vorhergehenden Ansprüche, **dadurch gekennzeichnet, dass** das Gateway (4) mindestens eine weitere Kommunikationsschnittstelle (GK4) aufweist und dass das Sanitärsystem weiterhin mindestens ein Drittsystem (9) mit einer drittsystemseitigen Kommunikationsschnittstelle (DK) aufweist, wobei eine Datenverbindung zwischen der weiteren Kommunikationsschnittstelle (GK4) und der drittsystemseitigen Kommunikationsschnittstelle (DK) bereitstellbar ist, über welche Datenverbindung der isolierte Steuerungsbefehl dem Drittsystem (9) durch das Gateway (4) bereitgestellt wird,
wobei das mindestens eine Drittsystem ein Lichtsystem mit mindestens einer Leuchte ist und wobei der isolierte Steuerungsbefehl das Lichtsystem bzw. die mindestens eine Leuchte ansteuert; und/oder
wobei das mindestens eine Drittsystem ein Lüftersystem mit mindestens einem Lüfter ist und wobei der isolierte Steuerungsbefehl das Lüftersystem bzw. den mindestens einen Lüfter ansteuert; und/oder
wobei das mindestens eine Drittsystem ein Duftspendersystem mit mindestens einem Duftspender ist und wobei der isolierte Steuerungsbefehl das Duftspendersystem bzw. den mindestens einen Duftspender ansteuert; und/oder
wobei das mindestens eine Drittsystem ein Alarmierungssystem ist und wobei der isolierte Steuerungsbefehl das Alarmierungssystem ansteuert.
